# EUROPEAN PATENT APPLICATION

(11) **EP 2 661 998 A1**
(43) Date of publication of application: **13.11.2013**
(21) Application number: 13165835.3
(22) Date of filing: 29.04.2013
(51) Int. Cl.: A47J 31/40

(54) **A powder dose dispenser for vending machines for beverage preparation**

(30) Priority: 08.05.2012 IT MI20120784
(71) Applicant: F.A.S. International S.p.A., 36015 Schio (Vicenza) (IT)
(72) Inventor: Morabito, Giuseppe, 36014 Santorso VI (IT)
(74) Representative: Sgobba, Marco

(57) **Abstract**

A powder dose dispenser for use in vending machines for beverage preparation comprises a plurality of distinct powder containing chambers (2), compacting members (4) for pressing a powder dose, metering members (10) selectively operating on one containing chamber (2) at a time, and designed to draw powders from the containing chambers (2) and deliver them to the compacting members (4). The metering members (10) and the containing chambers (2) are adapted to move relative to each other such that one containing chamber (2) at a time faces the metering members (10) .

## Description

### TECHNICAL FIELD

The present invention relates to a powder dose dispenser for use in vending machines for beverage preparation.

### BACKGROUND OF THE INVENTION

Soluble or infusion powders are used in vending machines for preparation of beverages to be dispensed upon user's request. An example of infusion powder is ground coffee, that is used for preparing espresso. Espresso coffee is a beverage obtained by percolation of pressurized hot water through a layer of ground coffee. As water flows through the ground coffee, its pressure drops and the beverage is dispensed at atmospheric pressure. Due to the particularly fine grinding of roasted coffee and to compaction of the ground powder, the percolation water encounters such a resistance as to allow extraction of aromatic substances that provide creaminess, flavor, body and aftertaste to the beverage.

Different coffee qualities impart different tastes, flavors and organoleptic properties to the beverage. Infinite combinations of tastes and flavors may be obtained by blending together different coffee qualities. The various types of blends may be also treated to extract the caffeine content from coffee, to obtain decaffeinated coffee.

Each consumer has his/her own preferences in terms of taste of the prepared beverage; modern vending machines must provide at least the selection between "normal" and decaffeinated coffee.

On the other hand, soluble powders are used in vending machines to prepare beverages having the taste of chocolate, milk, milk and chocolate and the like. Soluble powders are mixed with hot water to be dissolved therein and provide the beverage.

Also in this case, an infinite number of possible combinations of soluble powders exist, to obtain a wide range of beverage types.

It will be understood from the above that vending machines must be able to store various types of powders to prepare different types of beverages, such that the requirements of a plurality of users can be met.

For this purpose, vending machines are known to be equipped with a plurality of powder dose dispensers, each having a containing chamber for a type of powder and metering members for drawing a powder dose required for the preparation of a beverage from the containing chamber. The metering members usually consist of an electric motor that rotates a screw feeder plunging in the containing chamber and leading to a powder compacting device. As the screw feeder rotates, powder is drawn from the containing chamber and sent to the compacting device, which compacts the powders to prepare them for delivery to a percolation/mixing chamber for beverage preparation.

Prior art powder dose dispensers for use in vending machines for beverage preparation have a few drawbacks.

Although a large space is available for the dispensers in the vending machine, it still cannot accommodate a large number of dispensers. This is because the dimensions of a dispenser are given both by the powder containing chamber and by the metering members which, amongst other things, must be connected in parallel to the percolation/mixing chamber for beverage preparation.

Furthermore, the manufacturing cost of each dispenser has a non-negligible incidence on the global manufacturing cost of the vending machine, as the metering members require an electric motor for each containing chamber (note that the containing chambers are usually made of a plastic material that is suitable for storage of food products and have negligible manufacturing cost, as compared with the metering members).

In the light of the above described prior art, the technical purpose of the present invention is to provide a powder dose dispenser for use in vending machines for beverage preparation, that obviates the above drawbacks.

Particularly, an object of the present invention is to provide a powder dose dispenser for use in vending machines for beverage preparation, that allows storage of a large number of powder types.

A further object of the present invention is to provide a powder dose dispenser for use in vending machines that has lower manufacturing costs than in the prior art, assuming equal numbers of dispensable powder types.

### SUMMARY OF THE INVENTION

According to the present invention, the technical purpose and the intended objects are fulfilled by a powder dose dispenser for use in vending machines for beverage preparation as defined by the features of one or more of the annexed claims.

### BRIEF DESCRIPTION OF THE DRAWINGS

The features and advantages of the invention will appear from the following detailed description of an embodiment, which is illustrated without limitation in the annexed drawings, in which:
- Figure 1 shows a perspective schematic view of a powder dose dispenser for use in vending machines for beverage preparation according to the present invention;
- Figure 2 shows a top view of the dispenser of Figure 1;
- Figure 3 is a sectional view of the dispenser, as taken along the plane III - III of Figure 2;
- Figures 4 to 6 are enlarged views of a detail of the dispenser of Figure 3 in different operation steps; and
- Figure 7 is a schematic block view of certain details of the dispenser of Figure 1.

### DETAILED DESCRIPTION OF THE INVENTION

An infusion powder dispenser for vending machines according to the present invention will be generally designated by numeral 1.

The dispenser 1 of the present invention is adapted to store and dispense powder doses for beverage preparation in vending machines.

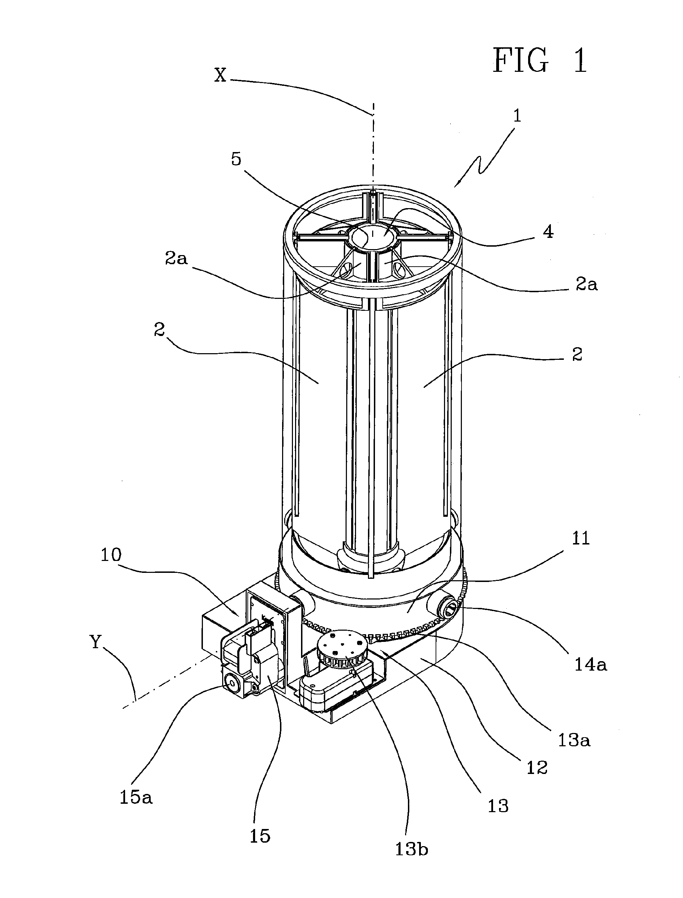

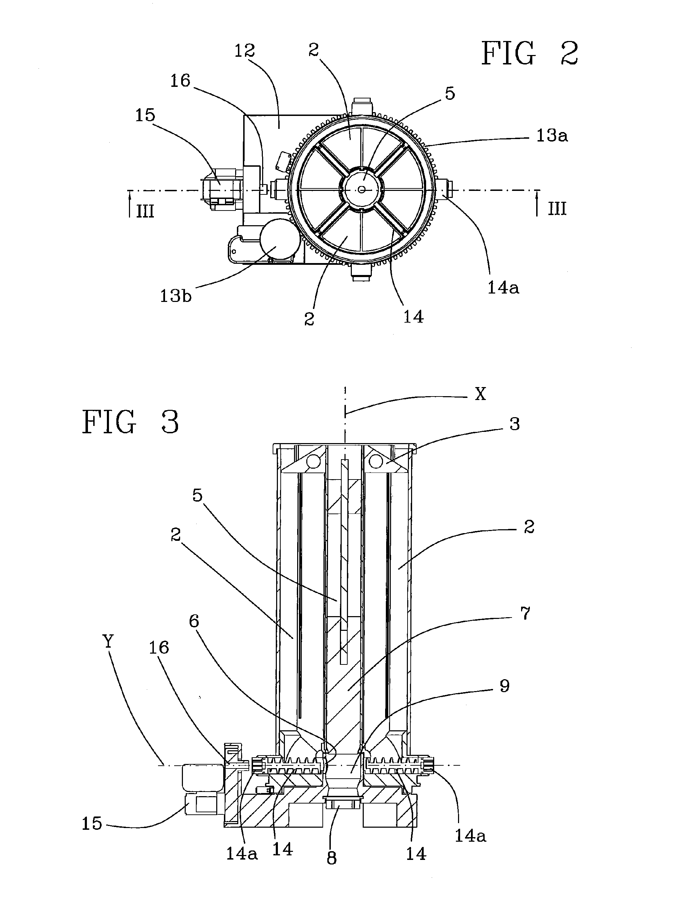

The dispenser 1 comprises a plurality of distinct containing chambers 2, containing infusion and/or mixing powdered products. An example of infusion powder is ground coffee, which is used for coffee preparation, and an example of mixing powder is powdered milk or chocolate. The containing chambers 2 are distinct in that each of them is adapted to store powders, but the powders of one chamber cannot spread over or mix with the powders contained in another chamber. Preferably, there are at least two storage chambers. In the preferred embodiment of the invention, there are four storage chambers 2, as shown in Figure 1. The storage chambers 2 have a prismatic shape and are preferably formed as sectors of a cylinder, in side-by-side arrangement to form a cylinder. As used herein, a cylindrical shape is intended as a substantially cylindrical shape, i.e. a shape resembling a cylinder; in other words, the above mentioned cylindrical shape shall not be necessarily intended in a strict geometric sense. All the containing chambers 2 are designed to be rotated about the same axis of rotation X. It shall be noted that the axis of rotation X is external to all the containing chambers 2, which means that it does not extend through the chambers 2. Each chamber 2 has its own top cover 3 (see Figure 3) which slides in the chamber 2, and particularly slides in a direction parallel to the axis X. Each top cover 3 always substantially contacts the surface of the powders contained in the chamber 2, and lowers as the surface of the powders lowers. This will both prevent foreign matter from entering the containing chamber 2, and allow the powders to be less exposed to air, for improved preservation of their organoleptic properties. Preferably, the storage chambers 2 are made of a food grade plastic material.

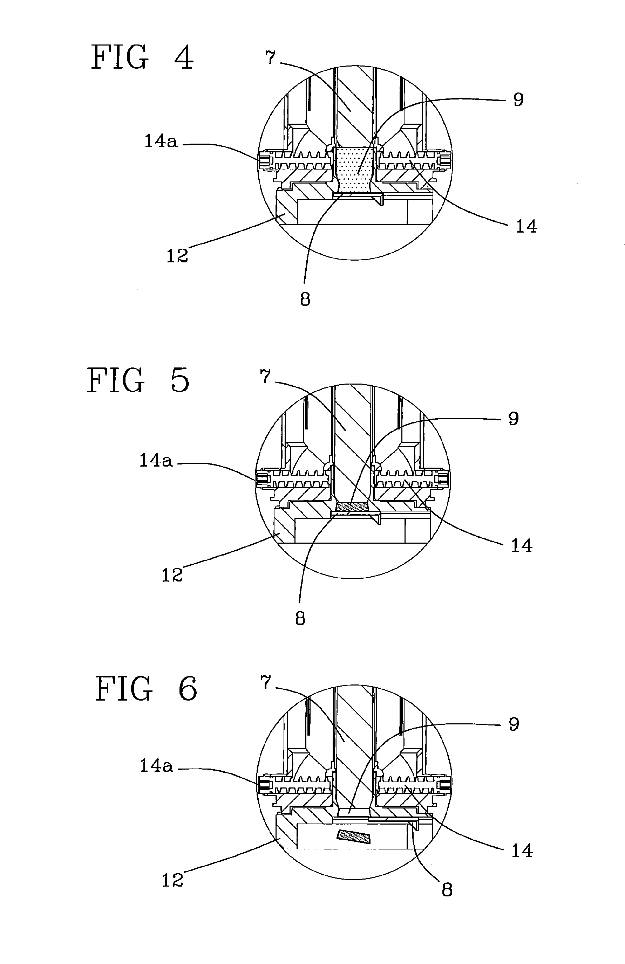

The dispenser 1 also comprises compacting members 4, which are designed to press a powder dose from one of the storage chambers 2 (as explained below) to form a pellet to be transferred to a percolation and/or mixing chamber for beverage preparation. The compacting members 4 include a cylinder 5, surrounded by the storage chambers 2 (see Figure 1). The cylinder 5 is stationary and the storage chambers 2 rotate relative to it. Particularly, the cylinder 5 acts as a guide for rotation of the chambers 2, which are rotatably constrained thereto via sliding shoes 2a that contact the outer lateral surface of the cylinder 5 (see Figures 1 and 2). The cylinder 5 has a longitudinal axis that coincides with the axis of rotation X of the chambers 2. The cylinder 5 has an aperture 6 in the proximity of the bottom of the chambers 2 (see Figure 3), for selective fluid communication of each storage chamber 2 with the interior of the cylinder such that powder doses can be transferred thereto. It shall be noted that the cylinder 5 has a single aperture 6 for powder admission. The compacting members 4 further comprise a piston 7 (see Figure 3), which is adapted to slide in the cylinder 5 to compact the powders transferred thereto. A cylinder closing door 8 is located in the end portion of the cylinder 5. The space bounded by the piston 7, the door 8 and the interior of the cylinder 5 forms a compacting chamber 9. The door 8 is designed to move from a closed position of the cylinder 5 (see Figures 3, 4 and 5), in which it seals the cylinder and hence the compacting chamber 9, and an open position of the cylinder (see Figure 6) in which it allows fluid communication of the interior of the cylinder 5 with the outside environment, by opening the compacting chamber 9. When the powders have been loaded in the compacting chamber 9, the piston 7 is in its lifted position and the door 8 is in its closed position (see Figure 4). Then, the piston 7 is lowered, and compacts the powders (see Figure 5), thereby reducing the volume of the compacting chamber 9. It shall be noted that the door 8 is now in its closed position. As soon as the powders have been compacted to form a pellet, the door 8 opens, thereby opening the compacting chamber 9 and allowing the pellet so formed to be unloaded to reach a percolation/mixing chamber of the vending machine (see Figure 6). It shall be noted that the aperture 6 in the cylinder 5 faces the compacting chamber 9 when the piston 7 is in its lifted position, and that the aperture 6 is closed by the piston 7 when the latter is in its lowered position.

The dispenser 1 comprises metering members 10 selectively operating on one containing chamber 2 at a time, and designed to draw powders from the containing chambers 2 and deliver them to the compacting members 4. The metering members 10 and the containing chambers 2 are adapted to move relative to each other such that the metering members 10 selectively face a single containing chamber. In the preferred embodiment of the invention, the containing chambers are designed to rotate and the metering members 10 are stationary. For this purpose, the dispenser 1 comprises a storage base 11 from which the storage chambers 2 extend. The storage base 11 is designed to rotate about the above mentioned axis of rotation X relative to a support frame 12 for the metering members 10. The support base 12 supports both the metering members 10 and the storage base 11. The storage base 11 has a substantially circular shape, with drive members 13 operating to rotate it. In the preferred embodiment of the invention (see Figure 1), the drive members 12 comprise a ring 13a extending over the entire circumference of the storage base 11. The ring 13a is mechanically connected to a pinion 13b having seats mating with the teeth of the ring 13a, such that the rotation of the pinion 13b causes the rotation of the storage base 11 about the axis of rotation X. The pinion 13b is rotatably mounted to the support frame 12 for the metering members 10.

Each containing chamber 2 has a screw feeder 14 therein (see Figure 3), which extends through the entire containing chamber 2 in a direction Y perpendicular to the axis of rotation X. Particularly, each screw feeder 14 extends from the peripheral wall of the storage base 11 to the wall of the cylinder 5, level with the aperture 6. The first end of the screw feeder 14, i.e. the end at the peripheral wall of the storage base 11, is equipped with a bushing 14a, which is designed to receive a rotating shaft in mechanical connection therewith. As the screw feeder 14 is rotated, it conveys the powders contained in the containing chamber 2 toward the aperture 6 of the compacting members 4. Here, each screw feeder 14 is selectively engaged by the metering members 10, which transfer amounts of motion to the screw feeder 14 to rotate it.

The metering members 10 comprise an electric motor 15 having a drive shaft 15a (as shown in Figure 1), which is mechanically connected to a transmission member 16 (see Figure 3). The transmission member 16 is movable relative to the drive shaft for connection to and disconnection from each screw feeder 14 (in Figure 3 the transmission member is shown to be disconnected from the screw feeder 14). Particularly, the transmission member 16 is designed for mechanical connection to the bushing 14a of the screw feeder 14. The mobility of the transmission member 16, i.e. its movement to and from the screw feeder 14 is provided by any mechanical or electromechanical device capable of moving the transmission member. An exemplary device that can be used to move the transmission member is the clutch system of a starter motor of the type that is used in automobiles. As the containing chambers 2 are rotated, a bushing 14a of a given chamber 2 is carried in front of the transmission member 16. As the latter is moved and connected to the bushing 14a, the screw feeder 14 is actuated, and pushes the powders into the cylinder 5, namely in the compacting chamber 9, through the aperture 6.

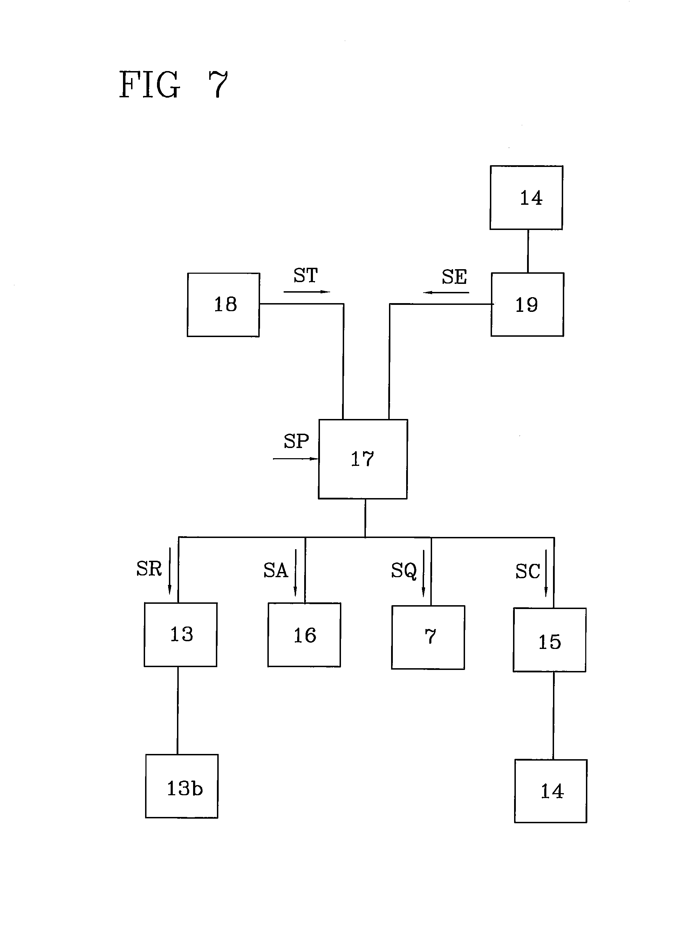

The actuation of the metering members 10 and the compacting members 4 is controlled by a control and monitoring unit 17 (see Figure 7). It shall be noted that the following relates to a dispenser 1 as described above, i.e. having a plurality of rotating containing chambers 2. Nevertheless, the following may also relate to a dispenser of the type comprising a single containing chamber 2, with respective metering members (e.g. as described above) associated therewith, for actuating a screw feeder 14 located in the containing chamber 2. The screw feeder 14 is designed to transfer powders to compacting members 4 as described above, i.e. comprising the cylinder 5 and the piston 7 (and having the aperture 6).

A signal SP is sent to the control and monitoring unit 17, which is representative of the type of powders to be delivered to the compacting members 4. It shall be noted that the amount of powders to be transferred to the compacting members 4 is a function of the type of powder, e.g. freeze-dried coffee powders require different amounts as compared with espresso powders. According to the signal SP it receives, the control and monitoring unit generates and sends a SR signal to the drive members 13, which is representative of the containing chamber 2 that is required to face the metering members 10 (assuming the dispenser is as described above). This operation is not carried out if the dispenser has a single containing chamber 2, with respective metering members 10 associated therewith. As the drive members 13, and particularly the pinion 13b, receive the signal SR, they rotate the storage base 11, until the chamber containing the selected powder faces the metering members 10. The control and monitoring unit 17 generates and sends an actuation signal SA to the transmission member 16, which mechanically connects to the screw feeder 14 as soon as it receives it. The control and monitoring unit 17 further generates a signal SQ representative of a positioning level and sends it to the piston 7. As the piston 7 receives this signal SQ, it reaches its predetermined level in the cylinder 5, thereby defining a containing volume of the compacting chamber 9, with the door 8. This volume is equal to the powder volume that has to be compacted to form the powder pellet to be delivered to the percolation/mixing device for beverage preparation. Therefore, the control and monitoring unit 17 generates a signal SC and sends it to the electric motor 15 of the metering members 10, allowing the screw feeder 14 to rotate and feed powders into the cylinder 5. It shall be noted that the control and monitoring unit 17 actuates the motor 15 and hence the screw feeder 14 for a predetermined time, which is a function of the amount of powders to be fed into the compacting members 4. Thus, a timer 18 generates a signal ST representative of the time of actuation of the screw feeder 14 and sends it to the control and monitoring unit 17. Alternatively, the control and monitoring unit actuates the motor 15 for as long as the screw feeder 14 runs a predetermined number of revolutions, which is a function of the amount of powders to be fed into the compacting members 4. In this case, an encoder 19 operating on the screw feeder 14 generates a signal SE representative of the number of revolutions run by the screw feeder 14, and sends it to the control and monitoring unit 17. In order to ensure that the required amount of powders is admitted into the compacting chamber 9, the actuation time for the motor 15 (or the number of revolutions of the screw feeder 14) is longer than the nominal time (or greater than the nominal number of revolutions of the screw feeder 14) required to feed the predetermined amount of powders. Therefore, the piston 7 compacts the powder and, as the door 8 is opened, the pellet so formed can be delivered to the percolation/mixing chamber of the vending machine.

Those skilled in the art will obviously appreciate that a number of changes and variants may be made to the arrangements as described hereinbefore to meet incidental and specific needs. All of these variants and changes fall within scope of the invention, as defined in the following claims.

## Claims

1. A powder dose dispenser for vending machines for beverage preparation, comprising a plurality of distinct powder containing chambers (2), compacting members (4) for pressing a powder dose, metering members (10) selectively operating on one containing chamber (2) at a time, and designed to draw powder from the containing chambers (2) and deliver it to the compacting members (4), said metering members (10) and said containing chambers (2) being movable relative to each other to selectively present one containing chamber (2) at a time to the metering members (10).

2. A dispenser as claimed in claim 1, wherein said containing chambers (2) substantially have the shape of a cylindrical sector and are rotatable about a common axis of rotation (X) for selective presentation thereof to said metering members (10).

3. A dispenser as claimed in claim 1 or 2, comprising a housing base (11), said containing chambers (2) extending away therefrom; said housing base (11) being rotatable about an axis of rotation (X) relative to a support frame (12) for said metering members (10).

4. A dispenser as claimed in claims 2 and 3, wherein said compacting members (4) comprise a cylinder (5), which is stationary relative to said support frame (12) and surrounded by said containing chambers (2), and a piston (7), which is adapted to slide in said cylinder (5) to compact the powder transferred thereto.

5. A dispenser as claimed in any preceding claim, comprising an auger (14) operating in each of said containing chambers (2), each auger (14) being selectively engageable by said metering members (10) and selectively put in fluid communication with said compacting members (4) to transfer powder doses thereto.

6. A dispenser as claimed in claim 5, wherein said metering members (10) include an electric motor (15) having a drive shaft mechanically coupled to a transmission member (16); said transmission member (16) being movable relative to said shaft to be mechanically and selectively coupled and uncoupled to and from each of said augers (14).

7. A dispenser as claimed in claims 4 and 5, wherein said cylinder (5) of the compacting members (4) includes a lateral opening (6), said lateral opening being selectively engageable by each auger (14) to put the corresponding containing chamber (2) in fluid communication with the cylinder (5) and transfer powder doses thereto.

8. A dispenser as claimed in claim 3, wherein said housing base (11) comprises a rack (13a) engaged by a pinion (11b); said pinion (13d) driving said housing base (11) into rotation about said axis of rotation (X).

9. A dispenser as claimed in claim 4, wherein said cylinder (5) of said compacting members (4) is coaxial with the axis of rotation (X) of said containing chambers (2).

10. A vending machine comprising at least one powder dose dispenser (1) as claimed in one or more of the preceding claims.
